# EUROPEAN PATENT APPLICATION

(11) **EP 4 260 973 A1**
(43) Date of publication of application: **18.10.2023**
(21) Application number: 22020171.9
(22) Date of filing: 13.04.2022
(51) Int. Cl.: B23K 35/02, B23K 35/30, C22C 38/02, C22C 38/04, C22C 38/14

(54) **WELD METAL AND METAL CORED WELDING WIRE FOR PRODUCING SUCH A WELD METAL**

(71) Applicant: Voestalpine Böhler Welding Fileur S.r.l., 35013 Cittadella (IT)
(72) Inventor: Todescato, Francesco, I-35013 Cittadella (IT)
(74) Representative: Keschmann, Marc

(57) **Abstract**

A weld metal having the following composition:
C: 0.040-0.100 wt.-%
Mn: 0.450-0.900 wt.-%
Si: 0.600-1.000 wt.-%
S: 0.005-0.025 wt.-%
B: 0.003-0.010 wt.-%
Ti: 0.030-0.100 wt.-%
and optionally:
Ni: 0.000-0.500 wt.-%
P: 0.000-0.020 wt.-%
Cu, Cr, Nb, N, Mo, Al, W and V: 0.000-0.020 wt.-% each, the balance being iron and unavoidable impurities.

## Description

The invention relates to a weld metal and a metal cored welding wire for producing the weld metal according to the invention comprising a filling powder and a sheath enclosing the filling powder.

Metal cored welding wires are commonly employed in electric arc welding of mild and low alloy steel base metals. These wires yield high strength welds in single pass and multiple pass welding operations at high welding speed. Metal cored welding wires are metal electrodes having a metal sheath and a core containing a composition of various powdered materials. The filler powder comprises approximately 5 to 40% of the total wire weight.

Manganese is an essential alloying addition in most welding electrodes. Manganese has several functions. It is a key strengthening alloy to the weld deposit; it chemically reacts with sulphur components in the molten weld metal, it acts as a deoxidizer, and it affects weld puddle control, wetting action and general ease of use of the welding electrode itself.

Manganese has a substantially lower boiling point than iron, therefore, it will vaporize more easily than iron leading to a higher presence on a percentage basis in welding fumes than in the original wire. There are significant concerns about potential neurological effects associated with exposure to manganese in welding fumes. Of particular concern is the high toxicity of ultrafine manganese particulates found in welding fumes, which can deposit deep in the lung alveoli and are capable of passing directly into the blood stream. Some studies indicate neurological and neurobehavioral deficits may occur when workers are exposed to low levels of manganese in welding fumes. These effects include changes in mood and short-term memory, altered reaction time, and reduced hand-eye coordination. Affected workers frequently show abnormal accumulations of manganese in a region of the brain known as the globus pallidus. The globus pallidus plays an important role in movement regulation.

Therefore, efforts have recently been taken to limit manganese exposure during welding operations.

It is, therefore, an object of this invention to provide a metal cored welding wire and a weld metal that allow to reduce the manganese content in the welding fumes without negatively affecting the mechanical properties of the weld metal.

To solve this and other objects, the invention provides a weld metal having the following composition:
C: 0.040-0.100 wt.-%
Mn: 0.450-0.900 wt.-%
Si: 0.600-1.000 wt.-%
S: 0.005-0.025 wt.-%
B: 0.003-0.010 wt.-%
Ti: 0.030-0.100 wt.-%
and optionally:
Ni: 0.000-0.500 wt.-%
P: 0.000-0.020 wt.-%
Cu, Cr, Nb, N, Mo, Al, W and V: 0.000-0.020 wt.-% each, the balance being iron and unavoidable impurities.

Thus, the weld metal of the invention comprises a low content of Mn (manganese) of only 0.450-0.900 wt.-%. The reduction of the Mn content, when compared to prior art weld metals having a Mn content of, e.g., > 1.2 wt.-%, would result in a decrease in tensile strength and toughness, if no compensating measures were taken. Therefore, in order to compensate for the reduction of the Mn content, the weld metal of the invention contains B (boron) and Ti (titanium). Both elements work in a similar manner with a view to obtaining a grain refinement. Smaller grains within the weld metal in turn result in better mechanical properties, compensating the absence of Mn. B and Ti have to be carefully dosed, because if the amount is too low mechanical properties are not satisfied, and if the amount is too high a drop in toughness and an increase in tensile strength are observed. Therefore, the content of B has been chosen to be 0.003-0.010 wt.-% and the content of Ti has been chosen to be 0.030-0.100 wt.-%.

Ni (nickel) could partially substitute the role of Mn, mostly regarding the toughness. Therefore, it is possible to add Ni in a range of up to 0.5 wt.%, preferably 0.3-0.5 wt.-%. However, Ni is very expensive and a key element to be controlled in fume emission due to its potentially harmful behavior. Therefore, an alternative embodiment provides that Ni is optionally present in an amount of ≤ 0.025 wt.-%. If it is not necessary at all to compensate for very low toughness, it is better to not employ it. Therefore, Ni has been defined as an optional element of the weld metal of the invention.

The presence of S (sulphur) is usually detrimental for the mechanical properties of steel. However, a small adequate insertion of S in metal cored wire of the invention can help to control the silicates present after welding. In particular, a careful dosed percentage of S can drive to big silicate islands formation that are easier to remove.

The weld metal of the invention may optionally comprise small amounts of Cu, Cr, Nb, N, Mo, Al, W and V. The amount of each of these elements, if present, is limited to 0.020 wt.-%. In some cases, these elements may also be contained as impurities.

As an additional advantage, the weld metal of the present invention is suitable for meeting the following standards: EN ISO 17632-A:2016, AWS A5.18/A5.18M:2021.

As used herein, any percentages by weight denote the weight of the respective chemical element with respect to the total weight of the weld metal.

According to a preferred embodiment of the invention, the weld metal has the following composition:
C: 0.050-0.090 wt.-%
Mn: 0.500-0.900 wt.-%
Si: 0.600-0.950 wt.-%
S: 0.010-0.020 wt.-%
B: 0.004-0.010 wt.-%
Ti: 0.030-0.080 wt.-%
and optionally:
Ni: 0.000-0.020 wt.-%
P: 0.000-0.015 wt.-%
Cu, Cr, Nb, N, Mo, Al, W and V: 0.000-0.020 wt.-% each, the balance being iron and unavoidable impurities.

In another preferred embodiment, the weld metal has the following composition:
C: 0.050-0.080 wt.-%
Mn: 0.550-0.850 wt.-%
Si: 0.650-0.900 wt.-%
S: 0.012-0.020 wt.-%
B: 0.005-0.009 wt.-%
Ti: 0.030-0.070 wt.-%
and optionally:
Ni: 0.000-0.020 wt.-%
P: 0.000-0.015 wt.-%
Cu, Cr, Nb, N, Mo, Al, W and V: 0.000-0.020 wt.-% each, the balance being iron and unavoidable impurities.

Preferably, the amounts of C and Mn present in the weld metal are chosen such that the sum of C and Mn is less than 0.70 wt.-%. This has the effect to ensure appropriate tensile properties.

Preferably, the amounts of Mn and Si present in the weld metal are chosen such that the sum of Mn and Si is greater than 1.40 wt.-%. This has the effect to ensure suitable tensile properties together with the maintaining of good weldability.

Preferably, the amounts of B and Ti present in the weld metal are chosen such that the ratio B/Ti > 0.10. This has the effect to refine the grains allowing the balance between good tensile properties and toughness. Moreover, it hinders the formation of silicates.

It is preferably provided that the weld metal of the invention has a tensile strength Rm of greater than 500 MPa, particularly preferably greater than 550 MPa, measured in a tensile test according to EN ISO 6892-1:2020.

The weld metal of the invention preferably has an offset yield strength Rp0.2 of greater than 450 MPa. The offset yield strength Rp0.2 is the 0.2% yield point, which corresponds to the uniaxial mechanical stress at which the permanent elongation based on the initial length of the specimen is exactly 0.2% after unloading, measured in a tensile test according to EN ISO 6892-1:2020.

The weld metal of the invention preferably has an elongation at break A > 20 %, preferably > 25 %, measured in a tensile test according to EN ISO 6892-1:2020. The elongation at break A is defined as the permanent change in length ΔL of a specimen in the tensile test after fracture has occurred, in relation to the initial length L0.

Further, the weld metal of the invention preferably has a necking Z = 65-75 %, measured in a tensile test according to EN ISO 6892-1:2020. The necking Z is defined as the relative reduction of the cross-section of a test specimen after fracture has occurred compared to the original cross-section.

Furthermore, it is preferably provided that the weld metal of the invention has an absorbed impact energy of greater than 47 J, particularly preferably greater than 65 J, at -30°C.

It is preferably provided that the weld metal of the invention has an absorbed impact energy of greater than 27 J, particularly preferably greater than 40 J, at -40°C.

The absorbed impact energy is determined in a notched-bar impact bending test according to EN ISO 148-1:2016.

According to a second aspect, the invention provides a metal cored welding wire, comprising a filling powder and a sheath enclosing the filling powder, the metal cored welding wire being designed to form a weld metal deposit of the invention in an arc welding process.

According to the invention, the sheath has the following composition:
C: 0.010-0.075 wt.-%
Mn: 0.100-0.400 wt.-%

and optionally:
   P: 0.000-0.025 wt.-%
   S: 0.000-0.020 wt.-%,
the balance being iron and unavoidable impurities,
and the filling powder has the following composition:
   C: 0.080-0.140 wt.-%
   Mn: 0.400-0.900 wt.-%
   Si: 0.650-1.100 wt.-%
   S: 0.005-0.015 wt.-%
   B: 0.005-0.015 wt.-%
   Ti: 0.070-0.200 wt.-%
and optionally:
   P: 0.000-0.002 wt.-%
   Ni: 0.000-0.001 wt.-%
   Cu, Cr, Nb, N, Mo, Al, W and V: 0.000-0.020 wt.-% each, the balance being iron and unavoidable impurities.

The use of the metal cored welding wire of the invention results in a substantial reduction of the Mn emission during welding. In particular, it has been observed that the fume occurring during the welding process contains less than 4 wt.-%, preferably less than 3 wt.-% of Mn. The Mn emission rate was below 0.250 mg/sec.

According to a preferred embodiment, the sheath has the following composition:
C: 0.020-0.050 wt.-%
Mn: 0.150-0.400 wt.-%
and optionally:
P: 0.000-0.012 wt.-%
S: 0.000-0.010 wt.-%,

As to the filling powder, a preferred embodiment provides that the filling power may have the following composition:
C: 0.085-0.130 wt.-%
Mn: 0.450-0.800 wt.-%
Si: 0.700-1.100 wt.-%
S: 0.005-0.012 wt.-%
B: 0.005-0.010 wt.-%
Ti: 0.080-0.150 wt.-%
and optionally:
P: 0.000-0.0015 wt.-%
Ni: 0.000-0.001 wt.-%
Cu, Cr, Nb, N, Mo, Al, W and V: 0.000-0.020 wt.-% each, the balance being iron and unavoidable impurities.

Even more preferable, the filling power may have the following composition:
C: 0.090-0.125 wt.-%
Mn: 0.500-0.800 wt.-%
Si: 0.750-1.000 wt.-%
S: 0.006-0.010 wt.-%
B: 0.006-0.010 wt.-%
Ti: 0.080-0.140 wt.-%
and optionally:
P: 0.000-0.0015 wt.-%
Ni: 0.000-0.001 wt.-%
Cu, Cr, Nb, N, Mo, Al, W and V: 0.000-0.020 wt.-% each, the balance being iron and unavoidable impurities.

It is preferably provided that the filling powder contains arc stabilizers in order to further improve the welding properties of the cored wire electrode.

Furthermore, it is preferably provided that the weight of the filling powder is between 10 and 20%, preferably 10-15%, of the weight of the metal cored welding wire. This value is also referred to as filling ratio. The filling ratio may preferably also be in the range of 10.8-11.5 %.

The metal cored welding wire of the invention may be coated with a coating being made of or comprising Cu (copper).

The metal powder cored welding wire can have an outer diameter of 0.9 mm to 2.4 mm.

In order to ensure that the filling powder is held securely in the sheath, it is preferably provided that the sheath is formed by a butt-butted or folded or welded band. This enables the simple and efficient production of the sheath by weighing the filling powder into a shaped strip and subsequently closing the latter. In principle, the metal powder cored welding wire can be manufactured in three different ways: butt-butted or folded manufacturing route; closed form manufacturing route or welded manufacturing route (e.g. laser welding or high-frequency welding). In the closed form, discontinuous manufacturing process, the powder is introduced into an already closed tube by shaking.

In the following, the invention will be explained in more detail by way of exemplary embodiments.

### Examples 1-4:

Metal cored welding wires having the compositions indicated in Table 1 were used.

**Table 1**

| **Ex.No.** | **1** | **2** | **3** | **4** |
|---|---|---|---|---|
| Sheath | | | | |
| C (wt.-%) | 0.031 | 0.031 | 0.031 | 0.031 |
| Mn (wt. -%) | 0.204 | 0.204 | 0.204 | 0.204 |
| P (wt.-%) | 0.007 | 0.007 | 0.007 | 0.007 |
| S (wt.-%) | 0.008 | 0.008 | 0.008 | 0.008 |

| Balance: | iron and unavoidable impurities | | | |
|---|---|---|---|---|
| Filling powder | | | | |
| C (wt.-%) | 0.113 | 0.116 | 0.112 | 0.112 |
| Mn (wt. -%) | 0.632 | 0.648 | 0.625 | 0.625 |
| Si (wt.-%) | 0.912 | 0.935 | 0.902 | 0.902 |
| P (wt.-%) | 0.001 | 0.001 | 0.001 | 0.001 |
| S (wt.-%) | 0.009 | 0.009 | 0.009 | 0.009 |
| B (wt.-%) | 0.008 | 0.009 | 0.008 | 0.008 |
| Ti (wt.-%) | 0.112 | 0.115 | 0.111 | 0.111 |

| Balance | iron and unavoidable impurities | | | |
|---|---|---|---|---|
| Coating | Cu | | | |
| Diameter (mm) | 1.2 | 1.2 | 1.2 | 1.2 |
| Filling ratio (%) | 11.2 | 11.5 | 11.1 | 11.1 |

Welding tests have been conducted with the welding wires indicated above, wherein the welding parameters indicated in Table 2 were used.

**Table 2**

| **Ex.No.** | **1** | **2** | **3** | **4** |
|---|---|---|---|---|
| Shielding gas | M21 | M21 | M21 | M20 |
| Current (A) | 265 | 260 | 265 | 270 |
| Voltage (V) | 28 | 28.2 | 28 | 28.5 |
| Welding speed (mm/min) | 370 | 370 | 370 | 370 |
| Wire speed (m/min) | 8.2 | 8.5 | 8.2 | 9.0 |
| Heat Input (kJ/mm) | 1.2 | 1.2 | 1.2 | 1.2 |

| | | | | |
|---|---|---|---|---|
| M20: 92% Ar/8% CO₂, M21: 82% Ar/18% CO₂ | | | | |

The resulting weld metal is indicated in Table 3.

**Table 3**

| **Ex.No.** | **1** | **2** | **3** | **4** |
|---|---|---|---|---|
| C (wt.-%) | 0.060 | 0.078 | 0.066 | 0.074 |
| Mn (wt. -%) | 0.661 | 0.793 | 0.667 | 0.720 |
| Si (wt.-%) | 0.765 | 0.835 | 0.773 | 0.830 |
| P (wt.-%) | 0.005 | 0.011 | 0.010 | 0.011 |
| S (wt.-%) | 0.015 | 0.019 | 0.017 | 0.016 |
| B (wt.-%) | 0.006 | 0.007 | 0.007 | 0.007 |
| Ti (wt.-%) | 0.048 | 0.050 | 0.044 | 0.053 |
| Balance | iron and unavoidable impurities | | | |

The weld metal of each example was tested for its mechanical properties in accordance with EN ISO 15792-1 edition: 2020, the results being indicated in Table 4.

**Table 4**

| **Ex.No.** | **1** | **2** | **3** | **4** |
|---|---|---|---|---|
| Rm (MPa) | 525 | 569 | 537 | 569 |
| Rp0.2 (MPa) | 463 | 494 | 462 | 492 |
| Elongation at break A (%) | 29.8 | 21.8 | 28.7 | 22.5 |
| Necking/striction Z (%) | 69.8 | 69.1 | 72.2 | 72.3 |
| KV @ -30°C (J) | 76 | 69 | 77 | 68 |
| KV @ -40°C (J) | 75 | 69 | 44 | 55 |

The tensile properties (Rm, Rp02, A and Z) were measured according to EN ISO 6892-1:2020. The impact tests (KV) were carried out according to EN ISO 148-1:2016.

### Welding fume analysis:

The welding wire of Example 2 was used to conduct a welding fume analysis. Testing was performed with the welding parameters indicated in Table 5.

**Table 5**

| **Parameter** | |
|---|---|
| Wire speed | 8.8 m/min |
| Current | 277 A |
| Voltage | 29.4 V |
| Shielding gas | M21 |
| Shielding gas flow rate | 18 l/min |
| Polarity | DC + |
| Welding speed | 100 cm/min |
| Contact tip welding distance | 20 mm |

The fume analysis was carried out according to EN ISO 15011-4:2018 and provided the results indicated in Table 6.

**Table 6**

| **Fume components** | |
|---|---|
| Fe | 60.10 wt.-% |
| Mn | 2.52wt.-% |
| Ni | 0.017 wt.-% |
| Cr | 0.021 wt.-% |
| Cu | 0.190 wt.-% |
| | |
| Fume emission rate (FER) | 9.6 ± 0.21 mg/s (34.6 g/h) |
| Mn emission rate | 0.242 mg/s |

## Claims

1. A weld metal having the following composition:
C: 0.040-0.100 wt.-%
Mn: 0.450-0.900 wt.-%
Si: 0.600-1.000 wt.-%
S: 0.005-0.025 wt.-%
B: 0.003-0.010 wt.-%
Ti: 0.030-0.100 wt.-%
and optionally:
Ni: 0.000-0.500 wt.-%
P: 0.000-0.020 wt.-%
Cu, Cr, Nb, N, Mo, Al, W and V: 0.000-0.020 wt.-% each, the balance being iron and unavoidable impurities.

2. A weld metal according to claim 1, having the following composition:
C: 0.050-0.090 wt.-%
Mn: 0.500-0.900 wt.-%
Si: 0.600-0.950 wt.-%
S: 0.010-0.020 wt.-%
B: 0.004-0.010 wt.-%
Ti: 0.030-0.080 wt.-%
and optionally:
Ni: 0.000-0.020 wt.-%
P: 0.000-0.015 wt.-%
Cu, Cr, Nb, N, Mo, Al, W and V: 0.000-0.020 wt.-% each, the balance being iron and unavoidable impurities.

3. A weld metal according to claim 1 or 2, having the following composition:
C: 0.050-0.080 wt.-%
Mn: 0.550-0.850 wt.-%
Si: 0.650-0.900 wt.-%
S: 0.012-0.020 wt.-%
B: 0.005-0.009 wt.-%
Ti: 0.030-0.070 wt.-%
and optionally:
Ni: 0.000-0.020 wt.-%
P: 0.000-0.015 wt.-%
Cu, Cr, Nb, N, Mo, Al, W and V: 0.000-0.020 wt.-% each, the balance being iron and unavoidable impurities.

4. A weld metal according to claim 1, 2 or 3, wherein Ni is present in an amount of 0.300-0.500 wt.-%.

5. A weld metal according to claim 1, 2 or 3, wherein Ni is optionally present in an amount of ≤ 0.025 wt.-%.

6. A weld metal according to any one of claims 1 to 5, wherein the sum of C and Mn is less than 0.70 wt.-%.

7. A weld metal according to any one of claims 1 to 6, wherein the sum of Mn and Si is greater than 1.40 wt.-%.

8. A weld metal according to any one of claims 1 to 7, wherein B/Ti > 0.10.

9. A metal cored welding wire for producing a weld metal according to any one of claims 1 to 8 by means of electric arc welding, comprising a filling powder and a sheath enclosing the filling powder, **characterized in that** the sheath has the following composition:
C: 0.010-0.075 wt.-%
Mn: 0.100-0.400 wt.-%
and optionally:
P: 0.000-0.025 wt.-%
S: 0.000-0.020 wt.-%,
the balance being iron and unavoidable impurities,
and wherein the filling powder has the following composition:
C: 0.080-0.140 wt.-%
Mn: 0.400-0.900 wt.-%
Si: 0.650-1.100 wt.-%
S: 0.005-0.015 wt.-%
B: 0.005-0.015 wt.-%
Ti: 0.070-0.200 wt.-%
and optionally:
P: 0.000-0.002 wt.-%
Ni: 0.000-0.001 wt.-%
Cu, Cr, Nb, N, Mo, Al, W and V: 0.000-0.020 wt.-% each, the balance being iron and unavoidable impurities.

10. A metal cored welding wire according to claim 9, wherein the sheath has the following composition:
C: 0.020-0.050 wt.-%
Mn: 0.150-0.400 wt.-%
and optionally:
P: 0.000-0.012 wt.-%
S: 0.000-0.010 wt.-%,

11. A metal cored welding wire according to claim 9 or 10, wherein the filling power has the following composition:
C: 0.085-0.130 wt.-%
Mn: 0.450-0.800 wt.-%
Si: 0.700-1.100 wt.-%
S: 0.005-0.012 wt.-%
B: 0.005-0.010 wt.-%
Ti: 0.080-0.150 wt.-%
and optionally:
P: 0.000-0.0015 wt.-%
Ni: 0.000-0.001 wt.-%
Cu, Cr, Nb, N, Mo, Al, W and V: 0.000-0.020 wt.-% each, the balance being iron and unavoidable impurities.

12. A metal cored welding wire according to claim 9 or 10, wherein the filling power has the following composition:
C: 0.090-0.125 wt.-%
Mn: 0.500-0.800 wt.-%
Si: 0.750-1.000 wt.-%
S: 0.006-0.010 wt.-%
B: 0.006-0.010 wt.-%
Ti: 0.080-0.140 wt.-%
and optionally:
P: 0.000-0.0015 wt.-%
Ni: 0.000-0.001 wt.-%
Cu, Cr, Nb, N, Mo, Al, W and V: 0.000-0.020 wt.-% each, the balance being iron and unavoidable impurities.

13. A metal cored welding wire according to any one of claims 9 to 12, wherein the filling ratio is 10.8-11.5 %.

14. A metal cored welding wire according to any one of claims 9 to 13, wherein the welding wire is coated with a coating being made of or comprising Cu.
